# EUROPEAN PATENT APPLICATION

(11) **EP 1 790 909 A1**
(43) Date of publication of application: **30.05.2007**
(21) Application number: 06122928.2
(22) Date of filing: 25.10.2006
(51) Int. Cl.: F24C 1/00, A21B 3/04

(54) **Steam cooking apparatus**

(30) Priority: 24.11.2005 KR 20050113166; 24.11.2005 KR 20050113169
(71) Applicant: Samsung Electronics Co., Ltd., Suwon-si Gyeonggi-do (KR)
(72) Inventor: Shon, Jong Chull, Suwon-si Gyeonggi-do (KR); Paik, Sang Hoon, Bundang-gu, Seongnam-si,Gyeonggi-do (KR); Kweon, Soon Ki, Gwacheon-si, Gyeonggi-do (KR); Lee, Sung Ho, Byeongjeom-ri,Taean-eup,Hwaseong-si,Gyeonggi-do (KR)
(74) Representative: Grünecker, Kinkeldey, Stockmair & Schwanhäusser Anwaltssozietät

(57) **Abstract**

The steam cooking apparatus includes a cooking compartment and a steam generating unit disposed at the outside of the cooking compartment and adapted to generate steam to be supplied into the cooking compartment. The steam generating unit includes a steam generating container to receive water therein, the steam generating container having a partitioned steam generating space, and a plate-shaped heater to heat the water received in the steam generating container. The plate-shaped heater includes a plurality of heating elements having different outputs from one another, thereby having the effect of enabling rapid and proper supply of steam required to cook different foods. The steam generating container is provided with an intercepting member, which divides the steam generating container into a water level sensing chamber and a steam generating chamber. The intercepting member prevents fluctuation of water level between the steam generating chamber and the water level sensing chamber.

## Description

### BACKGROUND OF THE INVENTION

### 1. Field of the Invention

The present invention relates to a steam cooking apparatus, and, more particularly, to a steam cooking apparatus having a steam generating unit using a plate-shaped heater.

### 2. Description of the Related Art

Generally, examples of conventional food cooking methods include a method for cooking food contained in a gas oven or electric oven by directly applying heat to the food, a method for heating a steam container containing food to cook the food indirectly, and a method for cooking food using high-frequency waves from a microwave oven.

When cooking food by directly heating the food using a gas oven or electric oven, there is a problem of food oxidization because the food comes into contact with oxygen contained in the air and this results in deterioration in the taste of the food. When cooking food using a steam container, the food contains an excessive amount of moisture and suffers from a reduction in peculiar flavor thereof. Also, when cooking food using a microwave oven, there is a problem in that high-frequency waves may fail to evenly irradiate the food, resulting in localized over or under cooking of the food.

To solve the above described problems of conventional cooking methods, a cooking apparatus for cooking food by supplying superheated steam to the food was developed, and many technologies have been published in relation with the cooking apparatus using superheated steam. It has been found that, when cooking food using the cooking apparatus using superheated steam, high-temperature superheated steam is directly delivered to an overall surface of the food and this has the effects of preventing over or under cooking of the food and keeping an appropriate amount of moisture in the overall food suitable to guarantee good taste of food. An example of a cooking apparatus using superheated steam is disclosed in Japanese Patent Laid-Open Publication No. 2005-0061816.

A steam cooking apparatus disclosed in the above mentioned Japanese Patent Laid-Open Publication No. 2005-0061816 includes a water tank, a steam generating unit, a steam heater, and a blowing device, and is adapted to supply superheated steam into a cooking compartment, so as to cook food by heat contained in the superheated steam. The disclosed steam generating unit includes an annular sheath heater, which is configured to surround an outer surface of a pot, so as to generate steam by heating water stored in the pot. Specifically, the sheath heater is formed by inserting an electric heating coil into a metal protective tube and filling magnesium oxide powder as insulating powder in the metal protective tube. The sheath heater has advantages in that it can be easily processed to have a variety of shapes and has high heat efficiency.

However, the steam generating unit having the above described sheath heater has a need for storing a predetermined amount of water in the pot. In the case of the sheath heater disclosed in the above mentioned Japanese Patent Laid-Open Publication, it is configured to surround the pot, and thus, requires a predetermined time to generate steam by heating the water stored in the pot. Accordingly, the disclosed sheath heater has difficulty to rapidly generating steam.

Furthermore, since the sheath heater has a single output capacity, the generation speed and generation amount of steam cannot be regulated separately.

Other examples of the cooking apparatus using superheated steam are disclosed in Japanese Patent Laid-Open Publications Nos. 2004-0205130 and 2004-0162936. In the disclosed conventional cooking apparatuses using superheated steam, if water stored in a steam generating container of a steam generating device is exhausted, new water has to be supplied from a water tank into the steam generating container. Therefore, to inform a user of a need to add water, the conventional cooking apparatuses must have a water level sensing device for sensing the level of water received in the steam generating container. A representative example of the water level sensing device is a water level sensor for sensing a position of a float, which is disposed in the steam generating container and adapted to move up and down based on a variation in the level of water.

However, in the above described superheated steam cooking apparatuses, while the water received in the steam generating container is heated and boiled by a heater, the water level exhibits excessive fluctuation, causing the level of the float to fluctuate. Since the fluctuation of the level of the float, consequently, causes the water level sensor to generate a false sensing signal, it is impossible to accurately sense the level of water received in the steam generating container.

### SUMMARY OF THE INVENTION

The present invention has been made in order to solve the above problems. It is an aspect of the invention to provide a steam cooking apparatus having a steam generating unit, which can generate steam rapidly and regulate the generation speed and generation amount of steam.

It is a further aspect of the invention to provide a steam cooking apparatus having a configuration to accurately sense the amount of water stored in a steam generating unit.

Consistent with one aspect, an exemplary embodiment of the present invention provides a steam cooking apparatus including a cooking compartment and a steam generating unit disposed at the outside of the cooking compartment and adapted to generate steam to be supplied into the cooking compartment, where the steam generating unit includes: a steam generating container to receive water therein, the steam generating container having a partitioned steam generating space; and a plate-shaped heater to heat the water received in the steam generating container.

The plate-shaped heater may include a plurality of heating elements.

The plurality of heating elements may have different outputs from one another.

The plurality of heating elements may be operated independently.

The plate-shaped heater may further include a single common power output terminal and a plurality of power input terminals.

The steam generating unit may further include a water level sensing device to sense the level of water received in the steam generating container.

The steam generating container may have a water level sensing chamber provided with the water level sensing device, and a steam generating chamber provided with the plate-shaped heater, and the steam generating container may include an intercepting member to divide the water level sensing chamber from the steam generating chamber.

The intercepting member may have an end spaced apart from the steam generating container, to guarantee intercommunication of water between the water level sensing chamber and the steam generating chamber.

The water level sensing device may include: a float disposed in the steam generating container and adapted to move up and down depending on a variation in the level of water; and a water level sensor to sense a position of the float to thereby sense the level of water.

The intercepting member may be formed with communication holes serving as passages of air, to keep the water level sensing chamber and the steam generating chamber at the same pressure as each other.

The water level sensor may include a stopper to prevent the float from being separated from the water level sensor.

Additional aspects and/or advantages of the invention will be set forth in part in the description which follows and, in part, will be apparent from the description, or may be learned by practice of the invention.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a perspective view showing the configuration of a steam cooking apparatus consistent with an exemplary embodiment of the present invention;
FIG. 2 is a front view showing the outer appearance of the steam cooking apparatus of FIG. 1;
FIG. 3 is a sectional view of the steam cooking apparatus of FIG. 1;
FIG. 4 is an exploded perspective view showing the configuration of a steam generating unit included in the steam cooking apparatus of FIG. 1;
FIG. 5 is a perspective view showing the configuration of a steam cooking apparatus consistent with another exemplary embodiment of the present invention;
FIG. 6 is an exploded perspective view showing the configuration of a steam generating unit shown in FIG. 5; and
FIG. 7 is a sectional view taken along the line A-A' of FIG. 5.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to like elements throughout. The embodiments are described below to explain the present invention by referring to the figures.

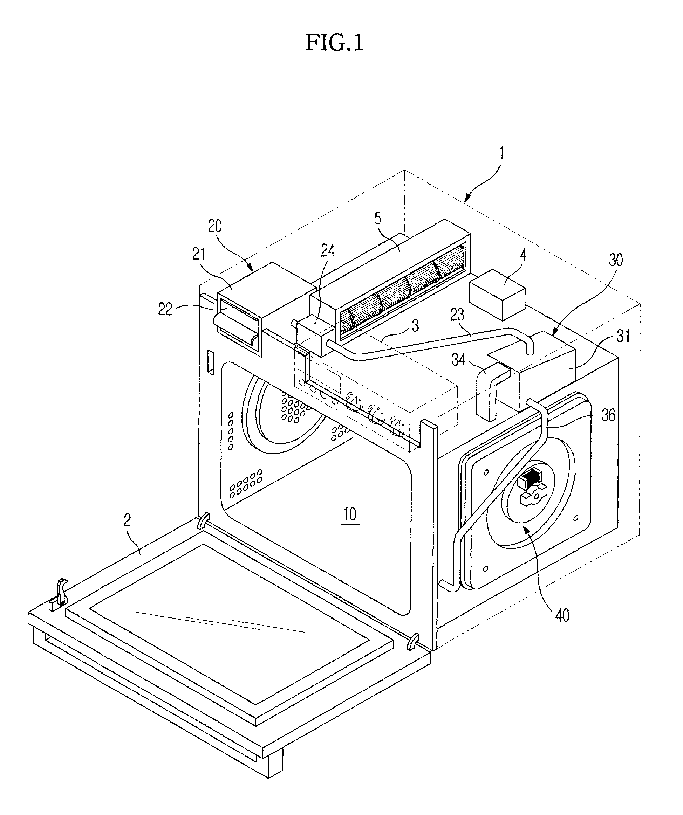

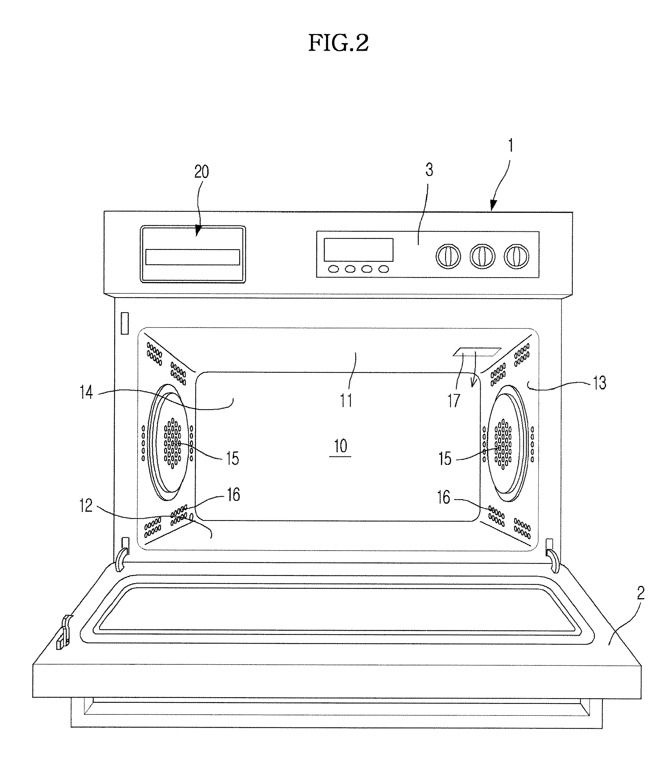

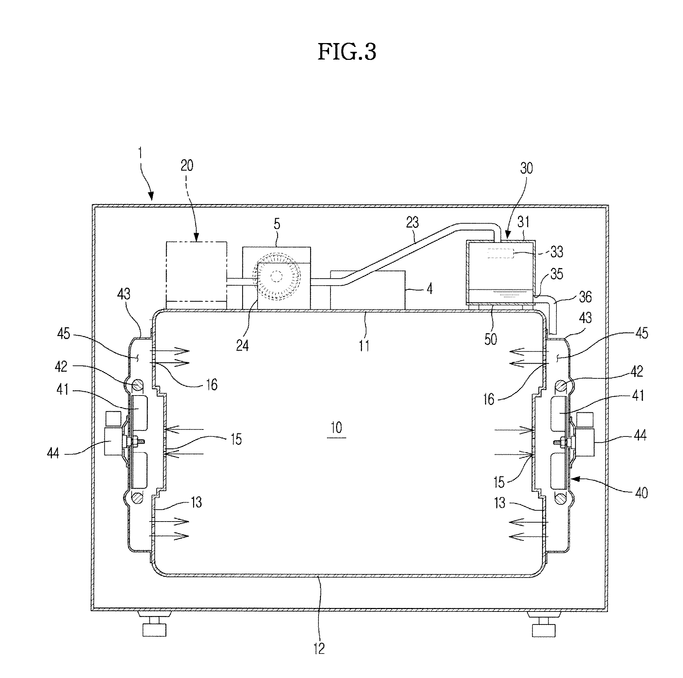

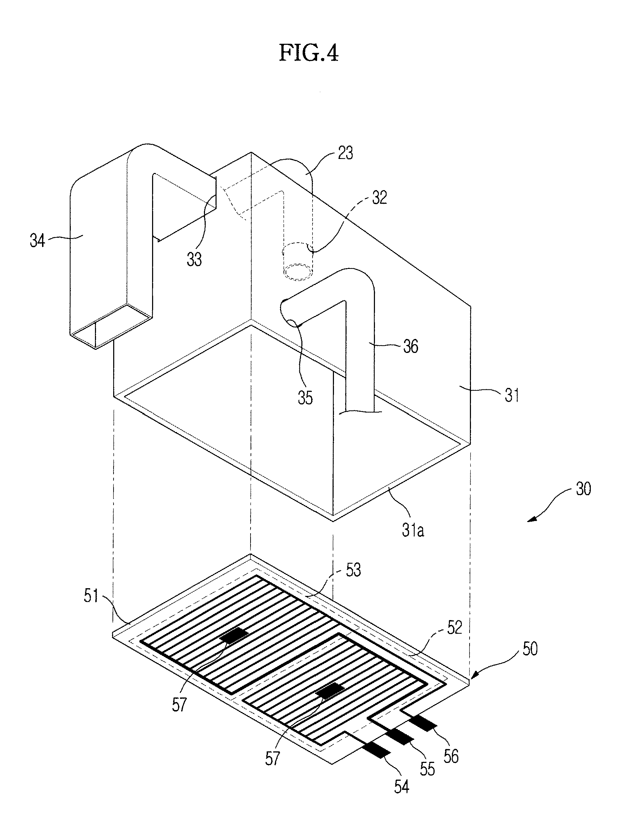

FIG. 1 is a perspective view showing the configuration of a steam cooking apparatus consistent with an exemplary embodiment of the present invention. FIG. 2 is a front view showing the outer appearance of the steam cooking apparatus of FIG. 1. FIG. 3 is a sectional view of the steam cooking apparatus of FIG. 1. FIG. 4 is an exploded perspective view showing the configuration of a steam generating unit included in the steam cooking apparatus of FIG. 1.

The steam cooking apparatus consistent with the exemplary embodiment of the present invention, as shown in FIGS. 1 and 2, includes a housing 1 forming the outer appearance of the apparatus, a cooking compartment 10 defined in the housing 1 to have a predetermined space within the housing 1, a door 2 to open and close an open front surface of the cooking compartment 10, and a control panel 3 installed on the cooking compartment 10. The steam cooking apparatus of the present invention further includes a water supply unit 20, a steam generating unit 30, and a pair of superheated steam supply units 40, which are disposed in the space between the housing 1 and the cooking compartment 10 to supply steam into the cooking compartment 10.

The cooking compartment 10 is constructed by a top plate 11, bottom plate 12, opposite lateral plates 13, and a rear plate 14, and has an inner space having a predetermined volume required to cook food. An insulating member (not shown) encloses the cooking compartment 10 to prevent leakage of heat from the cooking compartment 10 (See FIG. 2). Also, a magnetron 4 for generating microwaves and a cross-flow fan 5 for cooling the magnetron 4, steam generating unit 30, other electric elements, etc. are provided at an outer surface of the top plate 11 of the cooking compartment 10.

A plurality of small-diameter inlet holes 15 are arranged at the center of the respective lateral plates 13, and a plurality of small-diameter outlet holes 16 are arranged around the inlet holes 15, more particularly, along the periphery of the respective lateral plates 13. The plurality of outlet holes 16 may be symmetrically arranged at front and rear sides and upper and lower sides of the plurality of inlet holes 15. With the configuration of the lateral plates 13 of the cooking compartment 10, steam inside the cooking compartment 10 is introduced into the superheated steam supply units 40 through the inlet holes 15, and again returned into the cooking compartment 10 through the outlet holes 16 after being superheated to a high temperature.

The water supply unit 20 is mounted on an outer surface of the top plate 11 at a front location of the top plate 11. The water supply unit 20 includes a water supply case 21, a water supply container 22 slidable in the water supply case 21 to be inserted into or taken out of the water supply case 21, a water supply pipe 23 to connect the water supply container 22 to the steam generating unit 30, and a pump 24 provided on the water supply pipe 23 to supply water into the steam generating unit 30.

In the water supply unit 20 having the above described configuration, if water is filled in the water supply container 22, the water is pumped by the pump 24, to be supplied into the steam generating unit 30 through the water supply pipe 23.

The steam generating unit 30, as shown in FIGS. 1 and 4, has an approximately box shape, and is mounted on the outer surface of the top plate 11 at a lateral portion of the top plate 11. The steam generating unit 30 includes a steam generating container 31 that is connected to the water supply pipe 23 and adapted to receive the water introduced thereinto through the water supply pipe 23, and a plate-shaped heater 50 that forms a bottom wall of the steam generating container 31 and is adapted to heat the water received in the steam generating container 31, so as to generate steam.

The steam generating container 31 is perforated in a top wall thereof with a water supply hole 32 for the connection of the water supply pipe 23, and in an upper portion of a front wall thereof with a steam outlet opening 33 for supplying steam generated in the steam generating container 31 to the cooking compartment 10. A steam supply duct 34 is connected to the steam outlet opening 33 to communicate with a steam inlet opening 17 of the cooking compartment 10. With this configuration, if steam is generated in the steam generating container 31, the steam is supplied into the cooking compartment 10 through the steam supply duct 34. The steam generating container 31 is further perforated, in a lower portion of a lateral wall thereof, with a drain hole 35 so that a drain pipe 36 is connected to the drain hole 35, to drain water remaining in the steam generating container 31 after a cooking operation of the steam cooking apparatus is completed.

The superheated steam supply units 40, as shown in FIG. 3, are provided at outer surfaces of both the lateral plates 13 of the cooking compartment 10, respectively. Each of the superheated steam supply units 40 includes a circulating fan 41 to forcibly circulate the interior air of the cooking compartment 10 into the superheated steam supply unit 40 through the inlet holes 15 and again into the cooking compartment 10 through the outlet holes 16, a superheating heater 42 to heat the circulating air, so as to change steam included in the air into superheated steam, a case 43 coupled to the associated lateral plate 13 to encase the circulating fan 41 and superheating heater 42, and a motor 44 mounted to an outer surface of the case 43 and used to operate the circulating fan 41. With this configuration, a superheated steam duct 45 is defined between an outer surface of the lateral plate 13 and the case 43, and the circulating fan 41 and superheating heater 42 are located in the superheated steam duct 45. The interior air of the cooking compartment 10 is introduced into the superheated steam duct 45 through the inlet holes 15, and again returned into the cooking compartment 10 through the outlet holes 16 after being changed to the superheated steam by the superheating heater 42.

The plate-shaped heater 50, which is included in the steam generating unit 30 of the steam cooking apparatus consistent with the present invention, forms the bottom wall of the steam generating container 31. The plate-shaped heater 50 is provided with resistors, which are patterned into a ladder shape, to obtain a maximum electric heating area.

The plate-shaped heater 50 is a heater designed by pattern printing a resistor on an insulating substrate by a printed circuit board (PCB) technique to allow the substrate to emit heat by itself. The plate-shaped heater 50 has an advantage of enabling rapid heating. In the steam cooking apparatus of the present invention, especially, the plate-shaped heater 50 forms the bottom wall of the steam generating container 31. Therefore, even when only a small amount of water exists in the steam generating container 31, instantaneous steam generation by the plate-shaped heater 50 is possible.

The plate-shaped heater 50 forming the bottom wall of the steam generating container 31 includes an insulating substrate 51, a plurality of heating elements 52 and 53 to generate a preset amount of heat by use of the resistors pattern-printed on a surface of the insulating substrate 51 if power is applied thereto, and power input/output terminals 54, 55, and 56 formed at ends of the pattern-printed resistors for supplying power to the heating elements 52 and 53.

The insulating substrate 51 takes the form of an approximately rectangular thin plate, and has a size corresponding to the bottom area of the steam generating container 31.

The heating elements 52 and 53 are formed of the pattern-printed resistors. The resistors are pattern-printed on the insulating substrate 51 based on the fact that the resistance is proportional to the intrinsic resistance value and length of a resistor. Accordingly, even when constant power is supplied, the heating elements 52 and 53 can achieve a variety of desired outputs by changing the resistance of the heating resistors.

Depending on the pattern-printed shape of the resistors, two or more heating elements 52 and 53 may be provided, and these heating elements 52 and 53 are operable independently. For the convenience of explanation, in the present invention, it is assumed that the heating elements 52 and 53 include a first heating element 52 and a second heating element 53, which have different outputs from each other.

Also, although the outputs of the heating elements 52 and 53 may be determined differently in consideration of the size of the cooking compartment, the supply amount of steam, and the like, in the exemplary embodiment of the present invention, it is assumed that a maximum output of the first heating element 52 is 600W and a maximum output of the second heating element 53 is 400W.

The first heating element 52 is formed of the pattern-printed resistor having an approximately ladder shape. One end of the resistor is connected to a first power input terminal 54 and the other end of the resistor is connected to a common power output terminal 55.

The second heating element 53 has approximately the same shape as that of the first heating element 52, and is located adjacent to the first heating element 52. One end of the resistor forming the second heating element 53 is connected to a second power input terminal 56, and the other end of the resistor is connected to the common power output terminal 55.

Although the heating elements 52 and 53 may have power output terminals, respectively, in the present invention, only the single common power output terminal 55 is used, to achieve a reduction in the number of power output terminals as well as a simplified pattern of the resistors.

With the above described configuration, if the first power input terminal 54 and common power output terminal 55 are connected to each other, the first heating element 52 is operated. In this case, the plate-shaped heater 50 acts to heat the water received in the steam generating container 31 with an output of 400W. If the second power input terminal 56 and common power output terminal 55 are connected to each other, the second heating element 53 is operated. In this case, the plate-shaped heater 50 exhibits an output of 600W. Also, if both the first and second power input terminals 54 and 56 are simultaneously connected to the common power output terminal 55, the plate-shaped heater 50 is able to heat the water received in the steam generating container 31 with an output of 1000W, thereby achieving more rapid generation of an increased amount of steam.

At least one temperature sensor 57 may be provided at the center of the insulating substrate 51, or at the center of each heating element 52 or 53, to measure a temperature of the plate-shaped heater 50.

Hereinafter, the operation of the steam cooking apparatus having the above described configuration consistent with the present invention will be explained with reference to the drawings.

If a user puts food into the cooking compartment 10 and inputs a cooking command by operating the control panel 3, the pump 24 is operated, to supply water from the water supply unit 20 into the steam generating container 31 of the steam generating unit 30.

To generate steam depending on different cooking commands, it is preset whether the plurality of heating elements 52 and 53 are simultaneously operated or independently operated. For example, for a cooking command to cook food rapidly with a great amount of steam, the first and second heating elements 52 and 53 are operated simultaneously, to heat the water received in the steam generating container 31 with a total output of 1000W, so as to generate an increased amount of steam more rapidly. If a cooking command requiring an intermediate level of quickness is input, only the second heating element 53 is operated, and if a cooking command requiring a low level of quickness is input, the first heating element 52 is operated, so as to generate steam based on the preset conditions.

Accordingly, if the water is supplied into the steam generating container 31 based on the input cooking command, the first heating element 52 and/or second heating element 53 of the plate-shaped heater 50 are operated to exhibit the preset output, so as to generate a predetermined amount of steam in response to the input cooking command.

In this case, if no water is supplied into the steam generating container 31 or the previously supplied water is wholly changed into steam and thus, no water exists in the steam generating container 31, the steam generating container 31 may suffer from a rapid increase in temperature. The temperature sensor 57 provided in the plate-shaped heater 50 senses the increase in the temperature of the steam generating container 31, so as to intercept power if the temperature of the plate-shaped heater 50 increases beyond a predetermined temperature.

The steam, which is generated in the steam generating unit 30 by the heating operation of the plate-shaped heater 50, is introduced into the cooking compartment 10 through the steam supply duct 34, and in turn, is delivered into the superheated steam duct 45 through the inlet holes 15 in accordance with operation of the circulating fans 41 of the superheated steam supply units 40. Thereby, the steam is changed into superheated steam having a higher temperature by operation of the circulating fans 41 and superheating heaters 42 disposed in the superheated steam ducts 45. Then, the superheated steam is supplied into the cooking compartment 10 through the plurality of outlet holes 16 perforated in the lateral plates 13 of the cooking compartment 10.

With the above described procedure, a forcible circulating operation for continuously changing the interior air of the cooking compartment 10 into the superheated steam by operation of the circulating fans 41 and superheating heaters 42 and returning the resulting superheated steam into the cooking compartment 10 can be achieved.

Thereafter, if food is completely cooked, one-cycle of cooking ends, and the water remaining in the steam generating container 31 is discharged to the bottom plate 12 of the cooking compartment 10 through the drain pipe 36.

Now, a steam cooking apparatus consistent with another embodiment of the present invention will be explained. The same constituent elements as those of the above described embodiment of the present invention will be designated as the same reference numerals, and detailed description thereof will be omitted.

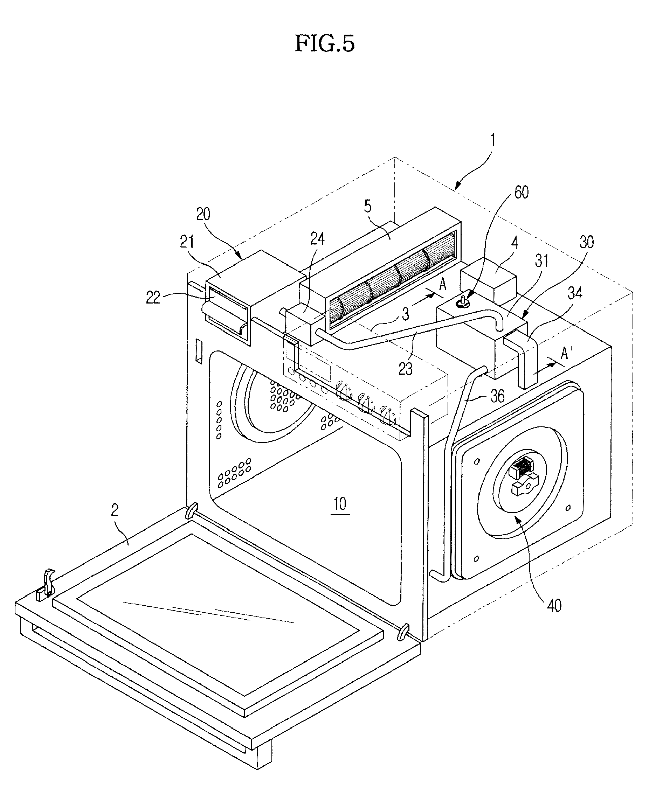

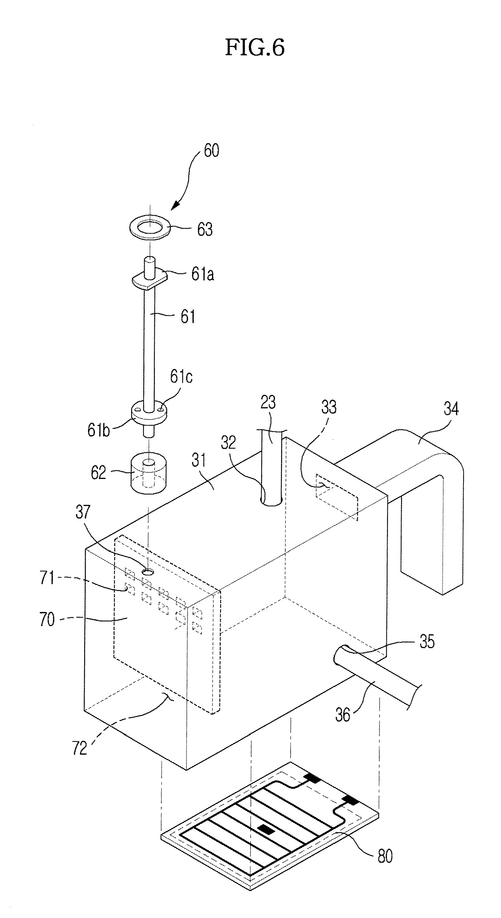

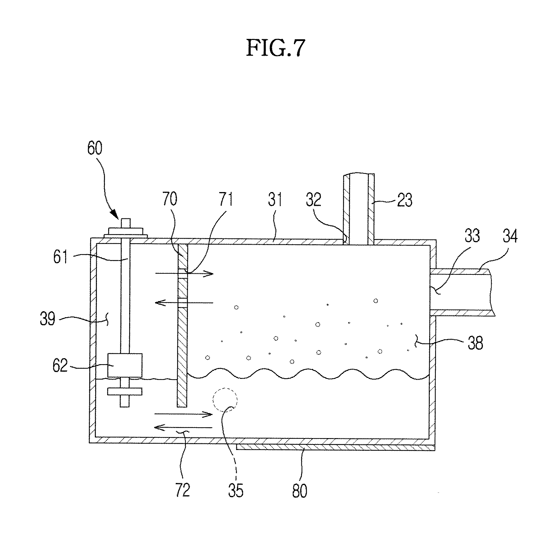

FIG. 5 is a perspective view showing the configuration of a steam cooking apparatus consistent with another exemplary embodiment of the present invention. FIG. 6 is an exploded perspective view showing the configuration of a steam generating unit shown in FIG. 5. FIG. 7 is a sectional view taken along the line A-A' of FIG. 5.

The steam generating unit consistent with another embodiment of the present invention, as shown in FIGS. 5 and 6, includes the steam generating unit 31 installed on the cooking compartment 10 and used to receive water therein, a plate-shaped heater 80 mounted to the steam generating container 31 and adapted to heat the water received in the steam generating container 31 so as to generate steam, and a water level sensing device 60 to sense the level of water in order to inform a user of a need to add water when the water in the steam generating container 31 is exhausted.

The plate-shaped heater 80 is mounted to the bottom of the steam generating container 31 at the outside of the container 31, to heat the water received in the steam generating container 31. Although the plate-shaped heater 80 may have a plurality of heating elements similar to the above described embodiment of the present invention, in the present embodiment, the plate-shaped heater 80 may include a single heating element, and may be installed at an outer lower surface of the steam generating container 31.

The water level sensing device 60, as shown in FIG. 6, includes a float 62 disposed in the steam generating container 31 and adapted to move up and down depending on a variation in the level of water, and a water level sensor 61 to sense a position of the float 62 to thereby sense the level of water.

The water level sensor 61 has a rod shape having a predetermined length so that it is inserted into a sensor insertion hole 37 perforated in the top of the steam generating container 31 to be spaced apart from the bottom of the steam generating container 31 by a predetermined distance. The float 62 has a centrally opened doughnut shape. Accordingly, the float 62 is inserted around the water level sensor 61 so that it is movable up and down while surrounding an outer circumference of the water level sensor 61. The doughnut shaped float 62 is formed, at an inner circumference thereof, with a magnet.

The water level sensor 61 is circumferentially formed with a flange portion 61a at a position near an upper end thereof. The flange portion 61a is configured to be seated on an outer upper surface of the steam generating container 31. A rubber packing 63 is interposed between a lower surface of the flange portion 61a and the upper surface of the steam generating container 31, to prevent leakage of steam.

The water level sensor 61 is further circumferentially formed with a stopper 61b at a position near a lower end thereof. The stopper 61b serves to allow the float 62 to move up and down without the risk of unintentional separation from the water level sensor 61. The stopper 61b is formed at an upper surface thereof with contact switches 61c. With this configuration, if the float 62 moves downward and comes into contact with the contact switches 61c, the water level sensor 61 sends a float sensing signal to a controller (not shown), to cause water to be supplied into the steam generating container 31 until the level of water in the steam generating container 31 reaches a predetermined value.

The steam generating container 31 is provided therein with an intercepting member 70. The intercepting member 70 is used to divide the interior of the steam generating container 31 into a water level sensing chamber 39, in which the water level sensing device 60 is located, and a steam generating chamber 38, to which the plate-shaped heater 80 is mounted. While the water received in the steam generating container 31 is heated and boiled by the plate-shaped heater 80 mounted to the outer lower surface of the steam generating container 31, accordingly, the intercepting member 70 serves to prevent the fluctuation of the level of the boiling water from being transmitted to the float 62 of the water level sensing device 60. The intercepting member 70 is positioned to divide the steam generating container 31 into two regions such that the steam generating chamber 38 has the same area as that of the plate-shaped heater 80 and the water level sensing chamber 39 for receiving the water level sensing device 60 is defined in the remaining region of the steam generating container 31.

The intercepting member 70 takes the form of a plate-shaped partition. The plate-shaped intercepting member 70 has an upper end and opposite lateral ends attached to a top surface and opposite sidewall surfaces of the steam generating container 31 and a lower end spaced apart from a bottom surface of the steam generating container 31 to define an opening 72. Accordingly, if water is supplied into the steam generating chamber 38 of the steam generating container 31, a part of the supplied water is introduced into the water level sensing chamber 39 through the opening 72, to thereby be stored in both the steam generating chamber 38 and water level sensing chamber 39.

The intercepting member 70 has a plurality of communicating holes 71 perforated in an upper portion thereof. The communicating holes 71 serve as air passages between the water level sensing chamber 39 and the steam generating chamber 38, thereby keeping both the water level sensing chamber 39 and the steam generating chamber 38 at the same pressure as each other and consequently, at the same water level as each other. This allows the water level sensing device 60 to accurately sense the level of water throughout the steam generating container 31.

The operation and effects of the steam cooking apparatus having the above described configuration will be explained with reference to FIGS. 5 and 7.

If a user puts food into the cooking compartment 10 and inputs a cooking command by operating the control panel 3, the pump 24 is operated, to supply water from the water supply unit 20 into the steam generating container 31 of the steam generating unit 30. A part of the supplied water is introduced into the water level sensing chamber 39 through the opening 72. Since the interior of the steam generating container 31 is kept at an even pressure by virtue of the communication holes 71 perforated in the upper portion of the intercepting member 70, the water level sensing chamber 39 and steam generating chamber 38 have the same water level as each other.

If the level of water received in the steam generating container 31 reaches a predetermined value, the water level sensor 61 senses the upward movement of the float 62, and sends a signal to a controller (not shown). Thereby, in a state wherein a water supply valve is switched off by the controller, the water received in the steam generating container 31 is heated by the plate-shaped heater 80, to generate steam.

In this case, since the water stored in the steam generating chamber 38 of the steam generating container 31 is directly heated by the plate-shaped heater 80, the steam generating chamber 38 experiences significant fluctuation of water level while the water is heated and boiled. However, in the present invention, the intercepting member 70 intercepts the fluctuation of water level generated in the steam generating chamber 38, and therefore, no fluctuation of water level is transmitted to the water level sensing chamber 39.

Accordingly, the water level sensing chamber 39 is not affected by the fluctuation of water level caused when the water is boiled in the steam generating chamber 38, and can keep a stable water level. This consequently prevents the float 72 from moving up and down along the level of the boiling water, and the water level sensing device 60 from generating a false sensing signal. In this way, the water level sensing device 60 of the present invention can more stably and accurately sense the water level as compared to the prior art.

As apparent from the above description, the present invention provides a steam cooking apparatus in which a plate-shaped heater is mounted to a steam generating unit, thereby achieving more rapid generation of steam.

The plate-shaped heater included in the steam cooking apparatus of the present invention has a plurality of heating elements capable of realizing a variety of outputs. Accordingly, when it is desired to cook a variety of foods, the plate-shaped heater can achieve a proper steam supply function for providing each food with a desired amount of steam.

Further, according to the present invention, the heating elements have a single common power output terminal to thereby achieve a reduction in the number of output terminals. This also has the effect of simplifying the pattern printing of resistors, resulting in a reduction in manufacturing costs.

Furthermore, a steam generating container consistent with the present invention is provided with an intercepting member to divide the interior of the steam generating container into a water level sensing chamber and a steam generating chamber. The intercepting member serves to prevent fluctuation of water level in the water level sensing chamber, thereby enabling more accurate sensing of the water level.

Although embodiments of the present invention have been shown and described, it would be appreciated by those skilled in the art that changes may be made in this embodiment without departing from the principles and spirit of the invention, the scope of which is defined in the claims and their equivalents.

## Claims

1. A steam cooking apparatus comprising a cooking compartment and a steam generating unit disposed at the outside of the cooking compartment and adapted to generate steam to be supplied into the cooking compartment, wherein the steam generating unit comprises:
a steam generating container to receive water therein, the steam generating container having a partitioned steam generating space; and
a plate-shaped heater to heat the water received in the steam generating container.

2. The apparatus according to claim 1, wherein the plate-shaped heater comprises a plurality of heating elements.

3. The apparatus according to claim 2, wherein the plurality of heating elements have different outputs from one another.

4. The apparatus according to claim 2, wherein the plurality of heating elements are operated independently.

5. The apparatus according to claim 2, wherein the plate-shaped heater further comprises a single common power output terminal and a plurality of power input terminals.

6. The apparatus according to claim 1, wherein the steam generating unit further comprises a water level sensing device to sense the level of water received in the steam generating container.

7. The apparatus according to claim 6, wherein:
the steam generating container has a water level sensing chamber provided with the water level sensing device, and a steam generating chamber provided with the plate-shaped heater; and
the steam generating container comprises an intercepting member to divide the water level sensing chamber from the steam generating chamber.

8. The apparatus according to claim 7, wherein the intercepting member has an end spaced apart from the steam generating container to guarantee intercommunication of water between the water level sensing chamber and the steam generating chamber.

9. The apparatus according to claim 6, wherein the water level sensing device comprises:
a float disposed in the steam generating container and adapted to move up and down depending on a variation in the level of water; and
a water level sensor to sense a position of the float to thereby sense the level of water.

10. The apparatus according to claim 7, wherein the intercepting member is formed with communication holes serving as passages of air to keep the water level sensing chamber and the steam generating chamber at the same pressure as each other.

11. The apparatus according to claim 9, wherein the water level sensor comprises a stopper to prevent the float from being separated from the water level sensor.

12. A steam generating apparatus generating steam for a cooking compartment, comprising:
a steam generating container receiving water therein, the steam generating container having a partitioned steam generating space; and
a plate-shaped heater heating the water.

13. The apparatus according to claim 12, wherein the plate-shaped heater comprises a plurality of heating elements, each of the plurality of heating elements being provided with resistors and patterned into a ladder shape.

14. The apparatus according to claim 13, wherein the plurality of heating elements are independently operable and have different outputs from one another.

15. The apparatus according to claim 13, wherein the plate-shaped heater further comprises a single common power output terminal and a plurality of power input terminals.

16. The apparatus according to claim 12, further comprising a water level sensing device to sense the level of water in the steam generating container.

17. The apparatus according to claim 16, wherein:
the steam generating container includes an intercepting member to divide the steam generating container into a water level sensing chamber and a steam generating chamber;
the water level sensing device is provided into the water level sensing chamber; and
the plate-shaped heater is provided adjacent to the steam generating chamber.

18. The apparatus according to claim 17, wherein an end of the intercepting member is spaced apart from the steam generating container allowing intercommunication of water between the water level sensing chamber and the steam generating chamber.

19. The apparatus according to claim 17, wherein the water level sensing device comprises:
a float disposed in the water level sensing chamber and adapted to move up and down depending on a variation in the level of water; and
a water level sensor to sense a position of the float.

20. The apparatus according to claim 17, wherein the intercepting member includes communication holes to keep the water level sensing chamber and the steam generating chamber at the same pressure.
